# EUROPÄISCHE PATENTANMELDUNG

(11) **EP 1 346 884 A2**
(43) Veröffentlichungstag der Anmeldung: **24.09.2003**
(21) Anmeldenummer: 03006058.6
(22) Anmeldetag: 19.03.2003
(51) Int. Cl.: B60R 21/02, B62D 33/06

(54) **Vorrichtung zum Schutz vor Verletzungen**

(30) Priorität: 22.03.2002 DE 10213034
(71) Anmelder: Schneider Fahrkomfort GmbH, 68167 Mannheim (DE)
(72) Erfinder: Schneider, Boris, 69514 Laudenbach (DE)
(74) Vertreter: Sartorius, Peter, Dipl.-Ing.

(57) **Zusammenfassung**

Vorrichtung zum Schutz vor oder zur Verhütung von Verletzungen bei Fahrzeuginsassen von Kraftfahrzeugen mit einer Fahrerkabine 1 **mit folgenden Merkmalen:**
a) die Fahrerkabine 1 weist vordere und hintere in etwa vertikal verlaufende Holme 2, 3 auf,
b) an mindestens einem Holm 3 ist ein Querträger 4 verstellbar angeschlossen,
c) der Querträger 4 ist in mindestens einer Position arretierbar,
d) der Querträger 4 weist an seiner Oberseite 5 und an seiner Unterseite 6 je einen Bügel 7, 8 auf,
e) der obere Bügel 7 schließt eine Fläche ein, die derart ausgebildet ist, dass sie den Fahrgast in etwa im Kopf-, Oberkörper- und Armbereich abdeckt,
f) der untere Bügel 8 schließt eine Fläche ein, die derart ausgebildet ist, dass sie den Fahrgast in etwa im Gesäßund Oberschenkel- und/oder Unterschenkel- und/oder Fußbereich abdeckt.

## Beschreibung

Die Erfindung bezieht sich auf eine Vorrichtung zum Schutz vor oder zur Verhütung von Verletzungen von Fahrzeuginsassen von Kraftfahrzeugen mit einer Fahrerkabine.

Es ist bereits eine Rückhaltevorrichtung für Gabelstapler, Schlepper und Baumaschinen bekannt (EP 0 992 382 A2), die mit einem Fahrerschutz versehen ist, der mittels Frontholmen und hinteren Holmen auf dem Chassis des Fahrzeuges abstützbar ist. Seitlich ist das Fahrerschutzdach bzw. die Fahrerkabine offen. Die seitlichen Öffnungen der Fahrerkabine sind mittels eines in etwa horizontal verlaufenden Trägers unterteilt, wobei der Träger an dem einen Holm an einem Scharnier angelenkt und an dem anderen Holm mittels eines Schließsystems gehalten ist.

Es sind andere Rückhaltesysteme bekannt (vergleiche Hebezeuge und Fördermittel, Sonderheft August 1992, Seite 19 und Seite 25 der Firma IWS Ingenieurgesellschaft Weiner und Schröter der Adam Opel AG), die jedoch aufgrund der zahlreichen horizontalen und vertikalen Verstrebungen in der Herstellung sehr aufwendig und daher teuer sind.

Der Erfindung liegt die Aufgabe zugrunde, die Vorrichtung zum Schutz vor und zur Verhütung von Verletzungen bei Fahrzeuginsassen gegenüber dem Stand der Technik so zu verbessern, dass bei gleichzeitiger Reduzierung der Herstellungskosten der seitliche Schutz des Fahrzeuginsassen wesentlich verbessert wird.

Gelöst wird die Aufgabe erfindungsgemäß durch eine Vorrichtung zum Schutz vor oder zur Verhütung von Verletzungen bei Fahrzeuginsassen von Kraftfahrzeugen mit einer Fahrerkabine mit folgenden Merkmalen:
a) die Fahrerkabine weist vordere und hintere in etwa vertikal verlaufende Holme auf,
b) an mindestens einem Holm ist ein Querträger verstellbar angeschlossen,
c) der Querträger ist in mindestens einer Position arretierbar,
d) der Querträger weist an seiner Oberseite und an seiner Unterseite je einen Bügel auf,
e) der obere Bügel schließt eine Fläche ein, die derart ausgebildet ist, dass sie den Fahrgast in etwa im Kopf-, Oberkörper- und Armbereich abdeckt,
f) der untere Bügel schließt eine Fläche ein, die derart ausgebildet ist, dass sie den Fahrgast in etwa im Gesäßund Oberschenkel- und/oder Unterschenkel- und/oder Fußbereich abdeckt.Hierdurch wird der Schutz des Fahrzeuginsassen vor Verletzungen wesentlich verbessert, da die gesamte Person seitlich durch die Vorrichtung großflächig abgedeckt ist, ohne dass die seitliche Sicht der Person nach außen beeinträchtigt wird. Da sie zumindest auf der linken Seite mit Bezug auf die Fahrtrichtung des Fahrzeugs an dem Querträger an der Oberseite sowie an der Unterseite fast spiegelbildlich je einen Bügel aufweist, wird einmal der Bereich des Oberkörpers und des Kopfes und mit dem unteren Bügel der Bereich des Oberschenkels, des Unterschenkels und der Füße abgedeckt und somit gegen seitlichen Aufprall oder beim Kippen des Fahrzeugs optimal geschützt. Ferner wird auch bei großflächenmäßiger Abdeckung, insbesondere im Seitenbereich, die seitliche Sicht und auch die Bewegungsfreiheit des Fahrzeuginsassen in keiner Weise beeinträchtigt, sondern durch die optimal flächenmäßige Abdeckung des Seitenbereichs des Fahrzeuginsassen die Sicherheit wesentlich erhöht.

Vorteilhaft ist es hierzu, dass die Bügel aus miteinander verbundenen Streben bestehen, wobei zumindest jeweils zwei Streben mit dem Querträger fest verbunden sind. Durch die einfache Ausgestaltung des Bügels, der lediglich aus zwei miteinander verbundenen Streben zusammengesetzt wird, lassen sich auf Grund der sehr einfachen und schnellen Montage die Herstellungskosten sehr stark reduzieren. Durch die vorteilhafte Ausbildung des in etwa horizontal bzw. geneigt verlaufenden ersten Bügels, der mit einem spazierstockartig ausgebildeten zweiten Bügel verbunden bzw. verschweißt wird, erhält man durch das Zusammensetzen eine optimale Formgebung mit einer sehr großen Fläche, die den Fahrzeuginsassen seitlich optimal abdeckt und diesen damit vor Verletzungen schützt.

Eine zusätzliche Möglichkeit ist gemäß einer Weiterbildung, dass die zwischen den Streben gebildeten Flächen freigelassen sind und dem Fahrgast eine Durchsicht nach außen ermöglichen.

Ferner ist es vorteilhaft, dass der obere Bügel aus einer ersten bogenförmig ausgebildeten Strebe besteht, die mit ihrem einen Ende an den Querträger und mit ihrem anderen Ende an einer zweiten aufstrebenden oder in etwa vertikal verlaufenden Strebe angeschlossen ist, die im oberen Bereich ein in etwa V-förmiges oder U-förmiges Strebenteil aufweist, dessen eines Ende an die bogenförmig ausgebildete Strebe und dessen anderes Ende an den Querträger angeschlossen ist.

Vorteilhaft ist es auch, dass der obere und der untere Bügel in etwa die gleiche Außenkontur aufweisen und/oder spiegelbildlich ausgebildet sind. Die spiegelbildliche Anordnung der beiden Bügel besagt, dass diese in der Formgebung ähnlich oder fast identisch ausgebildet sind, so dass der obere sowie der untere Bügel austauschbar an den Träger montiert werden können, wobei jedoch der untere Bügel seitenverkehrt an die untere Seite des Querträgers befestigt wird. Hierdurch lassen sich Herstellungs- und Lagerkosten weiter reduzieren.

Gemäß einer bevorzugten Ausführungsform der erfindungsgemäßen Lösung ist schließlich vorgesehen, dass der obere V- bzw. U-förmige Teil des Bügels mit Bezug auf eine Mittelachse und die Fahrtrichtung hinter der Mittelachse des Gesamtbügels und der untere V- bzw. U-förmige Teil des Bügels mit Bezug auf die Mittelachse und die Fahrtrichtung vor der Mittelachse des Gesamtbügels positioniert ist.

Von besonderer Bedeutung ist für die vorliegende Erfindung, dass der Querträger und die Bügel um mindestens eine in etwa vertikal verlaufende Achse horizontal verschwenkbar und/oder in der Höhenlage verstellbar angeordnet sind. Durch die schwenkbare Anordnung des Querträgers und der daran angeschlossenen Bügel kann der Querträger nach außen geschwenkt werden, damit der Zugang zur Fahrerkabine erleichtert wird.

Im Zusammenhang mit der erfindungsgemäßen Ausbildung und Anordnung ist es von Vorteil, dass die Querstrebe und die Bügel um mindestens eine in etwa vertikal verlaufende Achse horizontal verschwenkbar und/oder in der Höhenlage in Abhängigkeit des Fahrersitzes verstellbar angeordnet sind. Durch diese Anordnung ist es möglich, durch Verstellen der Schutzvorrichtung diese der Höhenlage des Fahrersitzes anzupassen.

Vorteilhaft ist es ferner, dass zumindest ein unterer Bügel als ein nach oben offenes U ausgebildet ist, dessen beide Schenkel an dem Querträger fest angeordnet sind.

Außerdem ist es vorteilhaft, dass der obere und untere Bügel aus zwei gebogenen Rohrteilen besteht, die zusammengefügt den Gesamtbügel bilden, wobei das eine Rohrteil das U- bzw. V-förmige Strebenteil aufweist, wobei nur die beiden gegenüberliegenden auf einer Ebene angeordneten Enden der Strebenteile mit dem Querträger fest verbunden sind.

Die Verwendung der aus Rohrteilen gebildeten Bügel erhöht die Verbindungssteifigkeit der gesamten Verbindung. Außerdem werden die Spannungen innerhalb des Systems auf ein Minimum reduziert.

Weitere Vorteile und Einzelheiten der Erfindung sind in den Patentansprüchen und in der Beschreibung erläutert und in den Figuren dargestellt. Es zeigt:
- Figur 1: eine Seitenansicht einer Fahrerkabine für ein Fahrzeug, beispielsweise einen Schlepper oder einen Gabelstapler,
- Figur 2: eine perspektivische Darstellung der beiden am Querträger angeordneten oberen und unteren Bügel,
- Figur 3: eine schematische Darstellung der Einzelteile der Streben vor dem Zusammenbau.

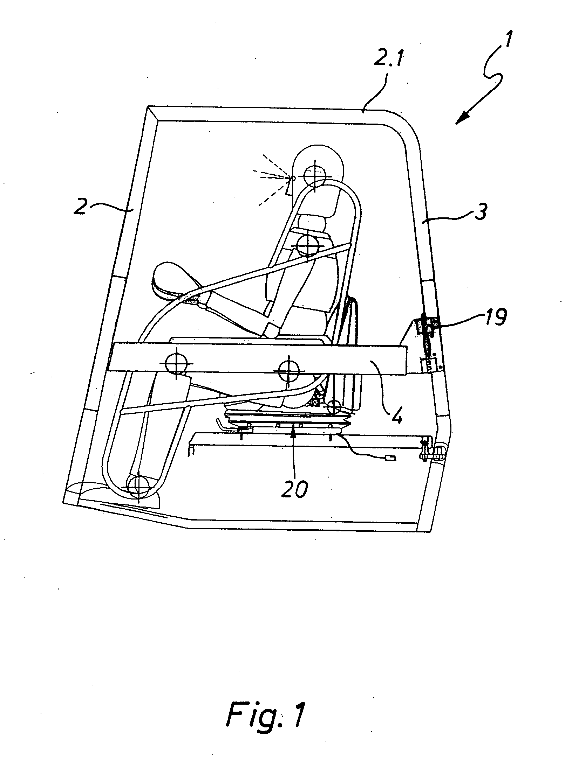

In der Zeichnung ist in Figur 1 eine Fahrerkabine mit 1 bezeichnet, die beispielsweise für Nutzfahrzeuge, insbesondere für Gabelstapler, Schlepper, Baumaschinen, Landmaschinen oder Kommunalfahrzeuge eingesetzt werden kann.

Die Fahrerkabine 1 ist mit dem Fahrzeug fest verbindbar und besteht aus rechten und linken vertikalen bzw. aufrecht stehenden vorderen Holmen 2, die über je einen horizontal verlaufenden Holm 2.1 mit einem hinteren vertikal bzw. aufrecht stehenden Holm 3 fest verbunden ist. In Figur 1 ist nur die linke Seite der Fahrerkabine mit den Holmen 2, 2.1 und 3 wiedergegeben. Auf der mit Bezug auf die Fahrtrichtung rechten Seite befinden sich ebenfalls gleiche Holme, die über in der Zeichnung nicht dargestellte Querträger oder Streben miteinander verbunden sind.

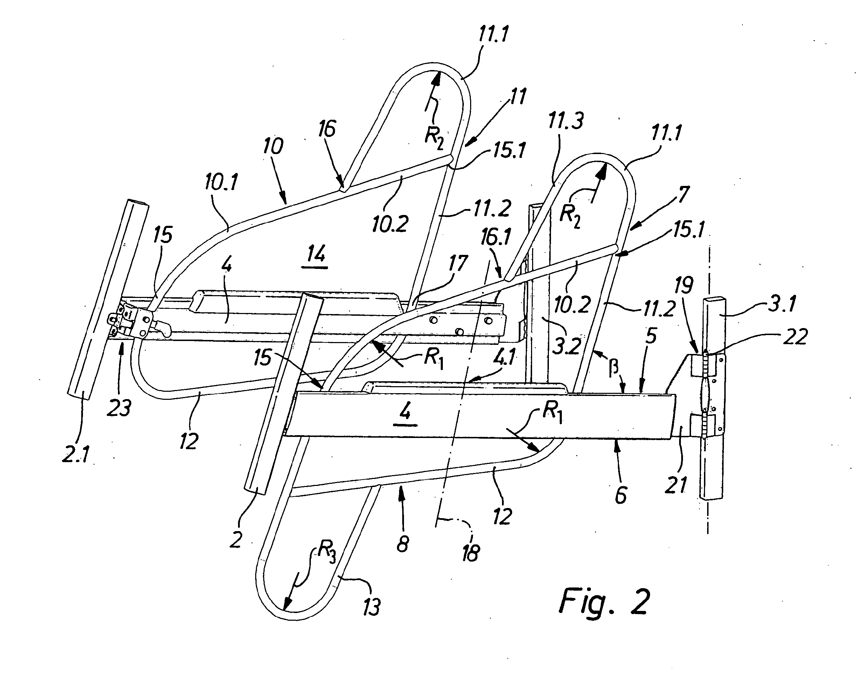

Wie insbesondere aus Figur 2 hervorgeht, ist an einem linken Holm 3.1 unter einem rechten Holm 3.2 je ein Querträger 4 angeschlossen, der mit Bezug auf die Standfläche des Fahrzeugs in etwa horizontal verläuft. Der Querträger 4 weist an seinem, mit Bezug auf die Fahrtrichtung gesehen, hinteren Ende eine Halterung 21 auf, die über ein Gelenk 2 mit dem vertikal verlaufenden Holm 3.1 bzw. 3.2 horizontal schwenkbar verbunden ist, so dass der Querträger 4 aus der in Figur 1 bzw. 2 dargestellten Arretierungsstellung nach außen verschwenkt werden kann, um den Zugang zum Innenraum der Fahrerkabine 1 freizugeben. Am vorderen Ende des Querträgers 4 befindet sich eine in der Zeichnung nur schematisch angedeutete Arretierungsvorrichtung 23, die den Querträger 4 in der in Figur 2 dargestellten Position am vorderen Holm 2, 2.1 festlegt, so dass eine Weiterverschwenkung des Querträgers 4 nur dann möglich ist, wenn die Arretierung 23 gelöst wird.

Der Querträger 4 kann beispielsweise aus einem rechteckförmigen Hohlprofil gebildet sein und weist eine Oberseite 5 sowie eine Unterseite 6 auf. An der innenliegenden Seite des Querträgers 4 befindet sich eine Polsterung 4.1 zum Schutz vor Verletzungen bei Fahrzeuginsassen.

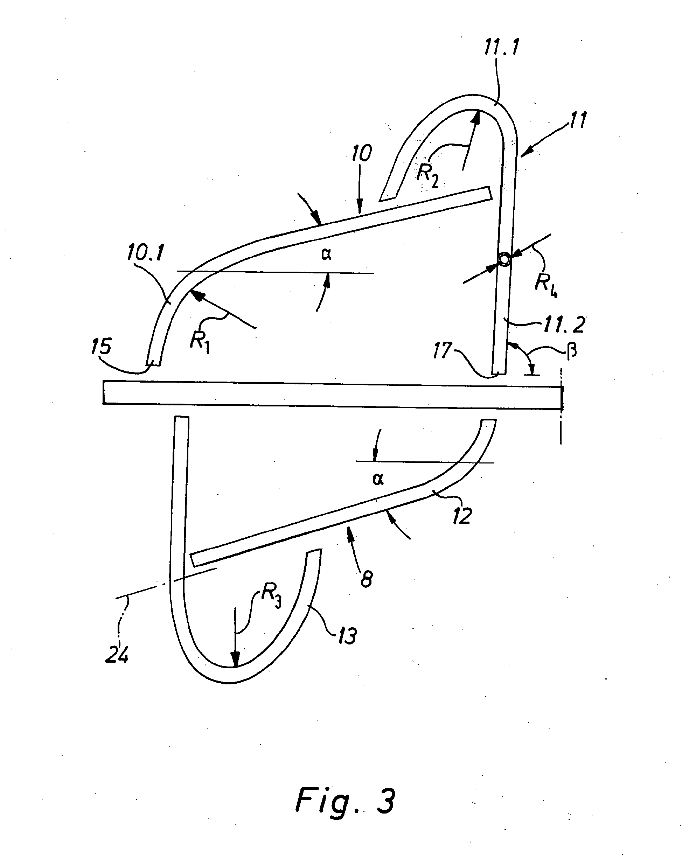

Wie insbesondere aus Figur 2 und 3 hervorgeht, ist an der Oberseite 5 des Querträgers 4 ein Bügel 7 angeschlossen, beispielsweise fest verschweißt. Der obere Bügel 7 schließt in etwa eine Fläche ein, die derart ausgebildet ist, dass sie den Fahrgast zumindest teilweise im Kopfbereich, im Oberkörper- und im Armbereich abdeckt. In der Seitenansicht weist der äußere Umriss des Bügels 7 die Form eines Sitzes auf und ist somit auch der Sitzhalterung des Fahrgastes angepasst.

In vorteilhafter Weise besteht der Bügel 7 aus einer festen Strebe 10, die mit Bezug auf die Oberseite 5 des Querträgers 4 bzw. auf die Standfläche des Fahrzeugs geneigt verlaufend angeordnet ist und in etwa einen Winkel α von 10° bis 30° einschließt. An einem vorderen Ende der Strebe 10 befindet sich ein Bogenteil 10.1 mit dem Radius R₁. Das vordere Ende 15 des Bogenteils 10.1 ist mit der Oberseite 5 des Querträgers 4 im Bereich des Holms 2 fest verbunden. Ein hinteres Ende 15.1 der Strebe 10 ist mit einem in etwa vertikal bzw. aufrecht stehenden Strebenteil 11.2 fest verbunden bzw. verschweißt. Wie aus Figur 2 hervorgeht, ist das Strebenteil 11.2 etwas nach hinten abgewinkelt und schließt mit der Oberseite 5 des Querträgers 4 einen Winkel β ein, der zwischen 90° und 75° Grad groß sein kann.

Am oberen Ende der Strebe 11.2 befindet sich ein Bogenteil 11.1mit dem Radius R₂, das im Ausführungsbereich ein nach unten offenes U bildet. Das Bogenteil 11.1 kann auch eine andere Formgebung, beispielsweise V-förmig oder rechteckig, haben. An das Bogenteil 11.1 schließt sich wiederum ein geneigt verlaufendes Strebenteil 11.3 an, das mit dem Strebenteil 10.1 fest verbindbar ist, bzw. verschweißt werden kann. Die in Figur 3 darstellte Explosionsdarstellung des Bügels 7 gibt genau den Zusammenbau der einzelnen Teile wieder, wie sie in vorteilhafter Weise zusammengesetzt, miteinander verbunden und am Querträger 4 befestigt werden.

Da die beiden Streben 7 und 11 in etwa die Form eines Spazierstocks haben, lassen sie sich serienmäßig kostengünstig herstellen und leicht zu einem großflächigen Bügelsystem zusammenfügen, so dass mit wenigen Bauteilen auf optimale Weise eine große Fläche als Sicherheits- oder Rückhaltevorrichtung für den Fahrzeuginsassen einer Fahrerkabine zur Verfügung gestellt werden kann, der durch dieses System seitlich optimal geschützt ist, besonders wenn das Fahrzeug seitlich kippt.

An der Unterseite 6 ist seitenverkehrt ein gleicher oder fast identischer Bügel 8 angeordnet, der ebenfalls aus einer geneigt verlaufenden Strebe 12 und einem Bogenteil mit dem Radius R₃ besteht, an das das haken- oder spazierstockförmige Strebenteil 13 fest angeschlossen ist. Auf der rechten Seite ist der untere Bügel 12 lediglich als U-Form ausgebildet und an der Unterseite 6 des Querträgers 4 befestigt. Je nach Ausführungsbeispiel kann jedoch der rechte Bügel 12 so ausgebildet sein wie der Bügel 8 auf der linken Seite der Fahrerkabine 1.

Die zwischen den Streben gebildeten Freiräume sollen vorteilhafterweise freigelassen werden, um dem Fahrgast eine optimale Sicht zur Seite und nach unten zu gewährleisten. Je nach Ausführungsbeispiel ist es jedoch auch möglich, im Zwischenraum des oberen Strebenteils 11.1 eine Polsterung vorzusehen, um den Kopfbereich vor einem harten Aufschlag zu schützen. Das U-förmige Bogenteil bzw. die Strebe 11.1 endet mit ihrem oberen Bogen im mittleren Bereich des Kopfes, wobei sich eine geneigt verlaufende Strebe 10.1 oberhalb des Knies oder des Oberschenkels des Fahrgastes bis in den Schulterbereich erstreckt und an der Rückseite der Schulter des Fahrgastes endet. Durch diese Ausbildung der einzelnen Strebenteile werden, wie bereits erwähnt, alle wesentlichen Teile des Fahrgastes seitlich geschützt. Je nach Ausführungsbeispiel ist es jedoch auch möglich, beispielsweise den oberen Teil des Bügels 7, insbesondere den U-förmigen Teil der Strebe 11.1 längenveränderlich auszubilden, um sie an die Sitzhöhe des Fahrgastes anzupassen.

Nach einer weiteren, in der Zeichnung jedoch nicht dargestellten Ausführung ist es beispielsweise möglich, auch den Querträger 4 am Holm 3 höhenverstellbar anzuordnen, um in Bezug auf den Fahrgast eine optimale Ausrichtung vornehmen zu können.

Gemäß Figur 3 kann das Strebenteil 13 für den rechts liegenden Bügel 12 an einer Schnittkante 24 entfernt werden, das heißt, der Bügel 8 bildet nun einen U-förmigen Bügel 12.

### Bezugszeichenliste

- 1: Fahrerkabine
- 2: Holm
- 2.1: Holm
- 3: Holm
- 3.1: Holm, links
- 3.2: Holm, rechts
- 4: Querträger
- 4.1: Polsterung
- 5: Oberseite
- 6: Unterseite
- 7: Bügel, oben = Gesamtbügel
- 8: Bügel, unten = Gesamtbügel
- 9: Fahrgast
- 10: Strebe
- 10.1: Bogenteil
- 10.2: Strebe
- 11: Strebe
- 11.1: Strebe, Bogenteil
V-förmiges oder U-förmiges Strebenteil
- 11.2: Strebe, Strebenteil
- 11.3: Strebenteil
- 12: Bügel, rechts
- 13: Strebenteil, Strebe
- 14: Fläche
- 15: vorderes Ende der Strebe 10
- 15.1: hinteres Ende der Strebe 10
- 16: Ende von 11.1
- 16.1: Ende von 11.1
- 17: Ende
- 18: Mittelachse
- 19: Achse
- 20: Fahrersitz
- 21: Halterung
- 22: Gelenk
- 23: Arretierung
- 24: Schnittkante

## Patentansprüche

1. Vorrichtung zum Schutz vor oder zur Verhütung von Verletzungen bei Fahrzeuginsassen von Kraftfahrzeugen mit einer Fahrerkabine (1), mit folgenden Merkmalen:
a) die Fahrerkabine (1) weist vordere und hintere in etwa vertikal verlaufende Holme (2, 3) auf,
b) an mindestens einem Holm (3) ist ein Querträger (4) verstellbar angeschlossen,
c) der Querträger (4) ist in mindestens einer Position arretierbar,
d) der Querträger (4) weist an seiner Oberseite (5) und an seiner Unterseite (6) je einen Bügel (7, 8) auf,
e) der obere Bügel (7) schließt eine Fläche ein, die derart ausgebildet ist, dass sie den Fahrgast in etwa im Kopf-, Oberkörper- und Armbereich abdeckt,
f) der untere Bügel (8) schließt eine Fläche ein, die derart ausgebildet ist, dass sie den Fahrgast in etwa im Gesäß- und Oberschenkel- und/oder Unterschenkel- und/oder Fußbereich abdeckt.

2. Vorrichtung nach Anspruch 1, **dadurch gekennzeichnet, dass** die Bügel (7, 8) aus miteinander verbundenen Streben (10-12) bestehen, wobei zumindest jeweils zwei Streben (10.1, 11.2, oder 12, 13) mit dem Querträger (4) fest verbunden sind.

3. Vorrichtung nach Anspruch 1 oder 2, **dadurch gekennzeichnet, dass** die zwischen den Streben (10-13) gebildeten Flächen (14) freigelassen sind und dem Fahrgast (9) eine Durchsicht nach außen ermöglichen.

4. Vorrichtung nach einem der vorhergehenden Ansprüche, **dadurch gekennzeichnet, dass** der obere Bügel (7) aus einer ersten bogenförmig ausgebildeten Strebe (10) besteht, die mit ihrem einen Ende (15) an den Querträger (4) und mit ihrem anderen Ende (15.1) an einer zweiten aufstrebenden oder in etwa vertikal verlaufenden Strebe (11.1, 11.2) angeschlossen ist, die im oberen Bereich ein in etwa V-förmiges oder U-förmiges Strebenteil (11.1) aufweist, dessen eines Ende (16) an die bogenförmig ausgebildete Strebe (10) und dessen anderes Ende (17) an den Querträger (4) angeschlossen ist.

5. Vorrichtung nach einem der vorhergehenden Ansprüche, **dadurch gekennzeichnet, dass** der obere und der untere Bügel (7, 8) in etwa die gleiche Außenkontur aufweisen und/oder spiegelbildlich ausgebildet sind.

6. Vorrichtung nach einem der vorhergehenden Ansprüche, **dadurch gekennzeichnet, dass** der obere V- bzw. U-förmige Teil des Bügels (7) mit Bezug auf eine Mittelachse (18) und die Fahrtrichtung hinter der Mittelachse des Gesamtbügels (7, 8) und der untere V- bzw. U-förmige Teil des Bügels (7) mit Bezug auf die Mittelachse (18) und die Fahrtrichtung, vor der Mittel/achse (18) des Gesamtbügels (7, 8) positioniert ist.

7. Vorrichtung nach einem der vorhergehenden Ansprüche, **dadurch gekennzeichnet, dass** der Querträger (4) und die Bügel (7, 8) um mindestens eine in etwa vertikal verlaufende Achse (19) horizontal verschwenkbar und/oder in der Höhenlage verstellbar angeordnet sind.

8. Vorrichtung nach einem der vorhergehenden Ansprüche, **dadurch gekennzeichnet, dass** der Querträger (4) und die Bügel (7, 8) um mindestens eine in etwa vertikal verlaufende Achse (19) horizontal verschwenkbar und/oder in der Höhenlage in Abhängigkeit eines Fahrersitzes (20) verstellbar angeordnet sind.

9. Vorrichtung nach einem der vorhergehenden Ansprüche, **dadurch gekennzeichnet, dass** zumindest ein unterer Bügel (12) als ein nach oben offenes U ausgebildet ist, dessen beide Schenkel an dem Querträger (4) fest angeordnet sind.

10. Vorrichtung nach einem der vorhergehenden Ansprüche, **dadurch gekennzeichnet, dass** der obere und untere Bügel (7, 8) aus zwei gebogenen Rohrteilen besteht, die zusammengefügt einen Gesamtbügel bilden, wobei das eine Rohrteil das U-bzw. V-förmige Strebenteil (11.1) aufweist und nur die beiden gegenüberliegenden auf einer Ebene angeordneten Enden (15, 17) der beiden Strebenteile (10, 11) mit dem Querträger (4) fest verbunden sind.
